# EUROPEAN PATENT APPLICATION

(11) **EP 4 624 303 A1**
(43) Date of publication of application: **01.10.2025**
(21) Application number: 24167120.5
(22) Date of filing: 28.03.2024
(51) Int. Cl.: B62B 3/00, B62B 3/02, B62B 3/10, B62B 3/18

(54) **A UNIT FOR SUPPORTING A PLURALITY OF CONTAINERS**

(71) Applicant: AUTOSTORE TECHNOLOGY AS, 5578 Nedre Vats (NO)
(72) Inventor: HEGGEBØ, Jørgen, 5578 Nedre Vats (NO)
(74) Representative: Kilburn & Strode LLP

(57) **Abstract**

The disclosure relates to a unit for supporting a plurality of containers. The unit comprises a frame and one or more shelves coupled to the frame. The one or more shelves are rotatable about a horizontal axis and slidable parallel to the horizontal axis.

## Description

### TECHNICAL FIELD

The disclosure relates to a unit. More particularly, it relates to a unit for supporting a plurality of containers.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Such an automated storage and retrieval system can provide a highly modular and efficient system for storage and retrieval of goods. The automated storage and retrieval system may achieve high storage density and may optimise when to retrieve different containers from the grid, but may in some circumstances limit individual accessibility of particular containers on demand.

Individual accessibility of particular containers may be desirable for several reasons. For example, some storage systems may comprise different storage grids held at different temperatures. Fulfilling an order comprising different temperature items may require consolidation of containers from these different temperature storage grids, for example in a buffer area for temporary storage of the containers before shipping or curb-side pickup. In some examples, some of the items of the order may be stored not in a storage grid, but in a different type of storage system. Individual accessibility of containers may enable consolidation of these off-grid items into the order.

In some examples, an order may not be known exactly, or may be updateable to add or remove items therefrom. In such situations, individual accessibility of the containers may enable the provided items to be aligned with the order in a dynamic manner. In some examples, the sequence/timing according to which different orders should be provided may not be known exactly. In some situations, this may be because the orders are to be picked up by customers or gig economy workers, such that the sequence/timing is dependent on their arrival at a storage facility. This may be particularly important for storage facilities comprising micro-fulfilment centres, i.e. in which a relatively small storage facility is located close to a densely-populated urban location.

There is a need to provide an efficient flow of items from an automated storage and retrieval system to the outside world. In other words, there is a need to provide more efficient storage and retrieval of items downstream of a storage grid. In addition, there is a need to achieve this while not compromising on the ability to store and consolidate items of an order efficiently, and to achieve this with as little human intervention as possible. As such, a problem with known automated storage and retrieval systems is that they are less flexible than desired. In addition, such known automated storage and retrieval systems are less responsive to dynamic changes in the content or sequence of orders than would be desirable.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a view of a unit according to the current disclosure;
Fig. 6 shows a further view of the unit according to the current disclosure;
Fig. 7 shows a further view of the unit according to the current disclosure;
Fig. 8 shows a further view of the unit according to the current disclosure;
Fig. 9 shows a further view of the unit according to the current disclosure;
Fig. 10 shows a further view of the unit according to the current disclosure;
Fig. 11 shows a further view of the unit according to the current disclosure;
Fig. 12 shows integration of an automated storage and retrieval system and the unit according to the current disclosure;
Fig. 13 shows a further view of the unit according to the current disclosure;
Fig. 14 shows a method according to the current disclosure;

### DETAILED DESCRIPTION

In overview the disclosure relates to a unit for supporting a plurality of containers. The unit includes a frame and one or more shelves coupled to the frame. The one or more shelves are rotatable about a horizontal axis and slidable parallel to the horizontal axis.

The shelf may rotate between a horizontal orientation and a vertical orientation. In the horizontal orientation, at least one container can be supported on the shelf. The sliding of the shelf enables the shelf, and the container supported thereon, to individually accessed. In the vertical orientation, the shelf may effectively be folded away to enable a container to be lowered onto the unit to be supported at a vertical height below the vertical height of the shelf. For example, the container may be lowered to rest on a further, lower shelf or on a base of the unit.

As such, the features of the unit and the shelf thereof interact to enable individual accessibility of a particular container, while enabling efficient storage and conveyance of containers through efficient loading and unloading of the containers from the unit. This enables provision of a more responsive storage system through enabling more dynamic adjustment of the content and sequencing of provided orders. In addition, it enables provision of a more efficient flow of items downstream of a storage grid.

The unit may include a pair of shelves each moveable in the manner described above. The pair of shelves may be coupled to the frame at a same vertical height. This may provide more stable support of a container supported on the shelves. Moreover, providing a pair of shelves may reduce the shelf width required, which reduces the space occupied by each shelf when it is disposed in the vertical orientation. This occupied space may be further reduced by providing the pair of shelves dimensioned such that they do not abut each other when in the horizontal orientation, but rather such that there is a horizontal space between them when in the horizontal orientation. The unit may include multiple shelves, or multiple pairs of shelves, at different vertical heights. This may increase the storage capacity of the unit and enable consolidation of larger orders.

The frame may include a respective horizontal support for each of the one or more shelves. Each of the horizontal supports may be aligned with a respective horizontal axis of a respective shelf and coupled to the respective shelf. Each shelf may include a respective hollow tube rotatably coupled to a respective horizontal support. The hollow tube may be disposed around and slidable with respect to the horizontal support. The hollow tube may be fixedly connected to a planar portion of the shelf for supporting a container thereon.

A horizontal support may include a first cooperating feature such as a slot and the corresponding shelf may include a second cooperating feature such as a protrusion slidable within the slot. This enables slidable movement of the shelf parallel to the respective horizontal axis when the shelf is in the horizontal orientation, but may prevent this slidable movement when the shelf is in the vertical orientation, for example due to the protrusion not aligning with the slot in this orientation. Each slot may include a respective recess which can receive a respective one of the protrusions when a respective shelf moves from the horizontal to the vertical orientation. This enables a more stable and reliable unit to be provided through only enabling sliding out of a shelf/container when in the appropriate orientation, rather than allowing sliding out of shelves, for example, when they are folded in the vertical orientation for disposing of containers on the unit.

The unit may include a base and one or more wheels coupled to the base to enable movement of the unit. This may further enhance the flexibility of the unit through providing easier transport of the unit and the containers thereon to different storage locations and/or to a delivery location. A top of the unit may be open to enable vertical insertion of containers into the unit. This may be performed with one or more shelves in the vertical orientation to enable positioning of containers below the vertical height of such shelves.

### Automated storage and retrieval system overview

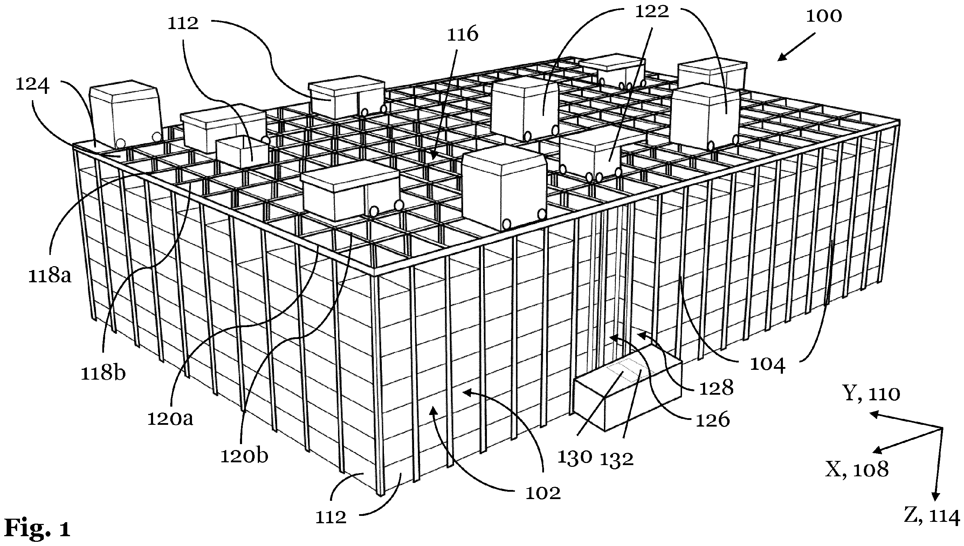

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots. These means may include the unit described herein.

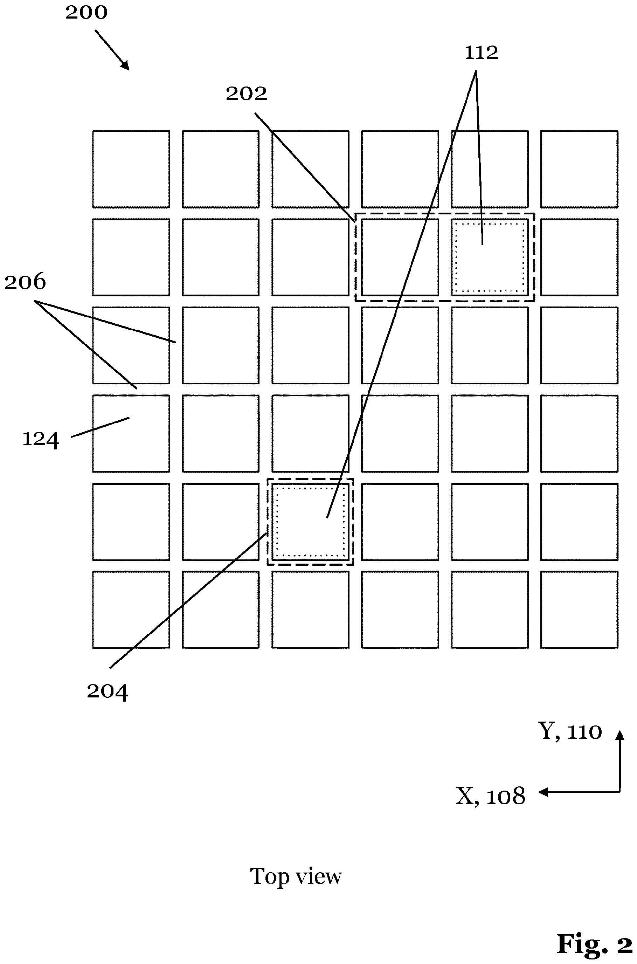

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

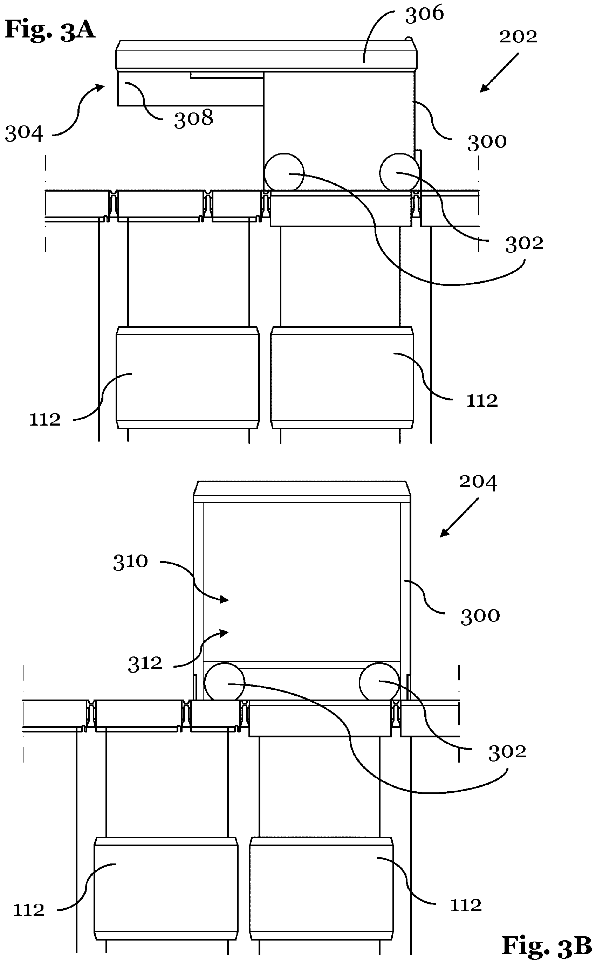

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

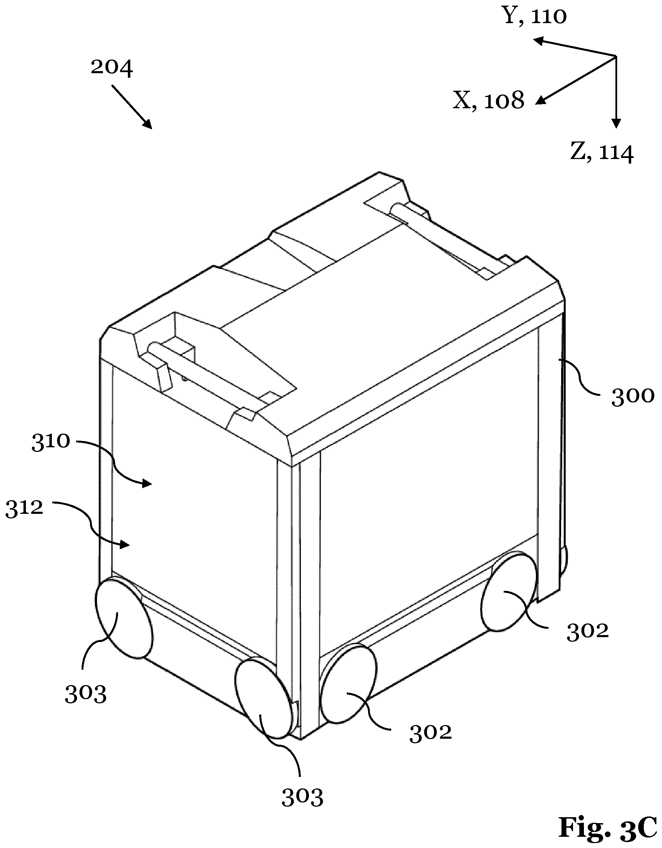

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

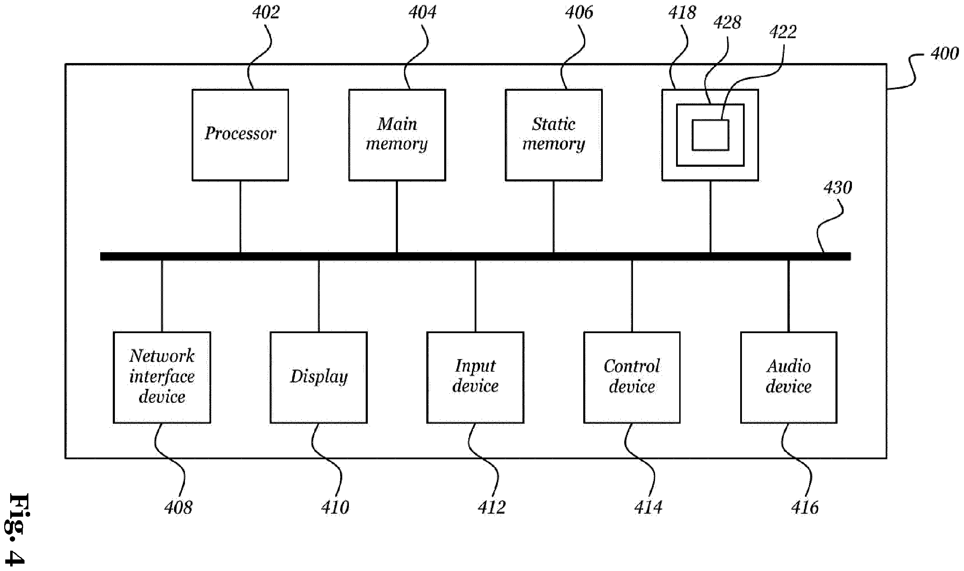

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation oƒ the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

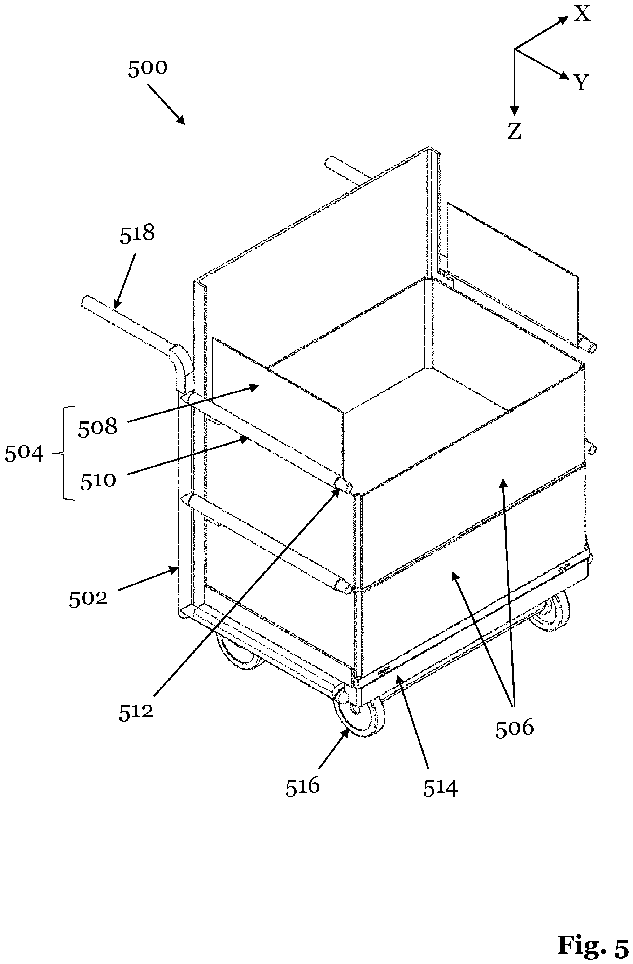

Referring to the embodiment shown in Fig. 5, a unit 500 is depicted. As used herein, the unit 500 may be referred to as a dolly, a cart or a module, and may be described as being for transport and/or storage of containers.

The unit 500 comprises a frame 502. The frame 502 may also be described as a support structure or a chassis. The frame 502 is a rigid structure which other components can be supported by or coupled to.

The unit 500 comprises one or more shelves 504. As described herein, the unit 500 may comprise one shelf 504 or a plurality of shelves 504. In Fig. 5, two shelves 504 are visible at the top of the unit 500 (on the left and right sides with respect to the X-direction as depicted in Fig. 5), but only one of these is labelled. In examples in which only one shelf 504 is present, the shelf 504 may have a greater width, i.e. may extend further in the X-direction than is depicted in Fig. 5. In such examples, the shelf 504 may extend beyond a centre point of the unit 500 in the X-direction, or may extend to the opposite side of the frame 502 (in the X-direction) to the side to which it is coupled.

The unit is configured to and suitable for supporting one or more containers 506. The containers 506 may correspond to the containers or bins 112 stored in and retrievable from the automated storage and retrieval system or grid 100.

The shelf 504 may comprise a planar portion 508 configured to support at least one of the containers 506. The shelf 504 may comprise a coupling structure 510, which may by way of non-limiting example be a hollow tube 510, configured to couple to the frame 502. The planar portion 508 may be fixedly connected to the coupling structure 510. Each of the shelves 504 of the unit 500 may comprise a respective planar portion 508 and a respective coupling structure as described herein.

The frame 502 may comprise one or more horizontal supports 512, such as bars or rods. Four horizontal supports 512 are depicted in Fig. 5, though only one is labelled. A respective horizontal support 512 may be provided for each of the shelves 504 included in the unit 500. Alternatively, two respective horizontal supports 512 maybe provided for each of the shelves 504 included in the unit 500 (such as in examples in which there is a single shelf 504 at each vertical height).

The shelf 504 is rotatable about a horizontal axis and is slidable parallel to the horizontal axis. As depicted in Fig. 5, the horizontal axis may be aligned with the Y-axis. The shelf 504 may be rotatable about the horizontal axis between a horizontal orientation (in the X-Y plane) and a vertical orientation (in the Y-Z plane). The shelf 504 may be slidable in the Y-direction (i.e. in a positive Y-direction and a negative Y-direction such that the shelf 504 can be slid out and in in a reversible manner). The disposing of the shelves 504 in the vertical orientation enables lowering of containers through an open top of the unit 500 to be disposed at a vertical height below these shelves 504. The top of the unit 500 may not have a cover or structure disposed in the X-Y plane, but rather may be open to enable lowering of containers 506 onto the unit 500 and/or raising of containers 506 from the unit 500.

As depicted in Fig. 5, the shelves 504 at the top left and top right of the unit 500 are in the vertical orientation. While not visible in Fig. 5, the uppermost container 506 at least may be supported on one or more shelves 504 in the horizontal orientation. In the horizontal orientation, the one or more shelves 504 may support a container 506 thereon.

Each of the horizontal supports 512 may be aligned with a respective one of the horizontal axes (i.e. may be disposed in the Y-direction). Each of the horizontal supports 512 may be coupled to a respective one of the shelves 504. For example, each of the horizontal supports 512 may be rotatably coupled to a respective one of the coupling structures 510. For example, each hollow tube 510 may be disposed around a respective one of the horizontal supports 512. As such, as depicted in Fig. 5, only the ends of the horizontal supports 512 are visible, with the hollow tubes 510 disposed around the horizontal supports 512. The hollow tubes 510 may rotate about the horizontal supports 512 to move the shelves 504, i.e. the planar portions 508 thereof, between the horizontal and vertical orientations. The hollow tubes 510 may slide relative to the horizontal supports 512 (in the Y-direction) to enable sliding in and out of the shelves 504.

A container 506 may be disposed or supported or rested on one or more shelves 504, i.e. the planar portions 508 thereof, when they are in the horizontal orientation. As such, the slidable movement of one or more shelves 504 also slides the container 506 in the Y-direction, enabling an interior of the container 506 to be accessed. In some examples, items may be added to or removed from the container 506 in this arrangement. In some examples, the container 506 may be removed from the unit 500 in this arrangement. In some examples, the container 506 may be fixed to the corresponding shelf or shelves 504 using one or more fixation mechanisms. A single container 506 may be supported on each shelf 504 or on each pair of shelves 504 at the same vertical height, rather than multiple containers 506 being stacked directly on top of each other. This enables a single container 506 to be withdrawn and accessed independently of other containers 506 supported by the unit 500.

The unit 500 enables individual accessibility of particular containers 506 and the items therein. The unit 500 enables dynamic provision of orders with multiple items, with items that may vary over time, and/or with variable sequencing relative to other orders.

Enabling lowering of containers 506 into the unit 500, and raising of containers 506 out of the unit, may be more efficient than disposing the containers 506 on the unit by other means, such as by sliding containers 506 onto shelves 504. For example, the grid 100 may store large numbers of containers 506 stacked to large heights, with robots 122 on top of the grid 100 being at a height above the height of the unit 500. As such, the robots 122 may lower the containers 506 onto the unit 500 from above. When multiple containers 506 are to be lowered, these can simply be lowered in a vertical direction by a predetermined distance, or until each container is sensed to come into contact with a shelf 504. This may be more efficient and mechanically simpler than attempting to slide the containers 506 onto shelves 504 in a horizontal direction. As such, the ability to move the shelves 504 into the vertical orientation enables different containers 506 to be disposed on different individual shelves 504 of the unit 500 at different vertical heights in an efficient manner.

The frame 502 may comprise one or more vertical supports fixedly connected to the horizontal supports 512. The frame 502 may comprise a base 514 at the bottom (in the Z-direction) of the unit 500. The base 514 may be coupled to one or more of the vertical supports and/or to one or more of the horizontal supports 512. The unit 500 may comprise one or more wheels 516, which may be coupled to the base 514 or to one or more of the horizontal supports 512. The unit 500 may comprise one wheel at each corner (in the X-Y direction) of the bottom of the unit 500, for example at each corner (in the X-Y direction) of the base 514. The one or more wheels 516 may enable easier movement of the unit 500, for example between different storage grids or between a storage grid and a delivery location. In some examples, other movement mechanisms, such as rollers or tracks, may be used instead of wheels 514.

The unit 500 may comprise a motor configured to drive one or more of the wheels 514 to rotate to move the unit 500. The unit 500 may comprise a steering mechanism for rotating one or more of the wheels 514. The unit 500 may comprise one or more sensors for sensing surroundings of the unit 500 and/or for receiving transmitted signals from a control device. The unit 500 may comprise a controller communicatively coupled to one or more of the motor, the steering mechanism and the sensors. The controller may be configured to receive data from the sensors, generate instructions based on the data, and transmit the instructions to the motor and/or the steering mechanism to affect or effect movement of the unit 500. As such, the unit 500 maybe configured for automated movement via self-steering.

The frame 502 may comprise one or more handles 518. The one or more handles may be gripped by an operator, or engaged by a robot, to enable propelling and/or steering of the unit 500.

The unit 500, including one or more of the frame 502, the shelf 504 and the other features described herein, may be formed of any suitable material. The material may be rigid enough and strong enough to support the containers with items stored therein without significant flexing or bending. The material may, for example, be a metal, polymer, wood, etc.

The unit 500, and the containers 506, may have any suitable shape. As depicted in Fig. 5, the unit 500 and the containers 506 have a generally rectangular shape or footprint, though the current disclosure is not limited thereto.

While pairs of shelves 504 are depicted in Fig. 5, the current disclosure is not limited thereto. In some examples, there may be only one shelf 504 present, or only one shelf 504 at each vertical height on the unit 500.

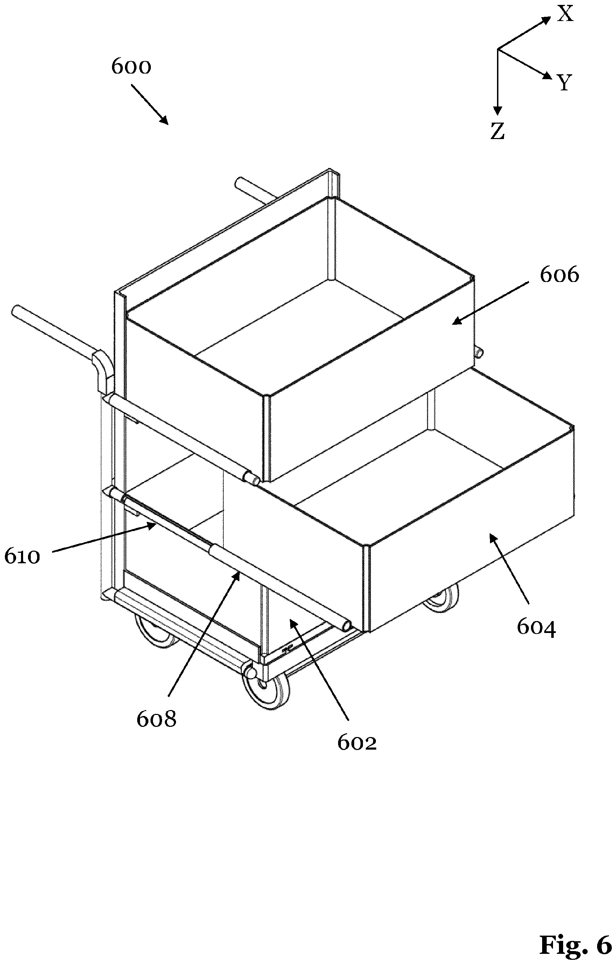

Referring to the embodiment shown in Fig. 6, a unit 600 is depicted. The unit 600 may correspond to and comprise corresponding features to unit 500.

Fig. 6 depicts the unit 600 with a first container 602, a second container 604 and a third container 606 supported thereon. The second container 604 is supported on one or more shelves generally corresponding to the shelves 504 of Fig. 5, but which are not fully visible in Fig. 6 as they are under the second container 604. These one or more shelves and the second container 604 supported thereon are slid out/translated in Fig. 6, in a direction parallel to the Y-axis, relative to the corresponding container 506 in Fig. 5. This enables access to the individual second container 604 and the contents therein. In particular, this individual access is provided without requiring movement of the third container 606 (or the first container 602), thereby providing more efficient individual access to (the interior of) the second container 604.

The sliding out of the second container 604 may be enabled by movement of the hollow tube 608 of the corresponding shelf relative to the horizontal support 610 on the frame of the unit 600. This is depicted for the hollow tube 608 and horizontal support 610 on the left side of the unit 600 as depicted in Fig. 6, but in examples with a pair of shelves at the same vertical height, there may be a corresponding hollow tube 608 and horizontal support 610 on the right side of the unit 600 which also slide relative to each other to enabling sliding out of the second container 604.

It will be appreciated that, while the second container 604 is slid out in Fig. 6 and the first container 602 and the third container 606 are not slid out (i.e. they abut a back of the unit 600), any one, multiple or all of the first container 602, second container 604 and third container 606 may be slid out at any particular time.

Relative to the situation in Fig. 5, the third container 606 is present in Fig. 6. Accordingly, while the uppermost one or more shelves 504 in Fig. 5 may be disposed in the vertical orientation, in Fig. 6 these may be disposed in the horizontal orientation (though they are not fully visible in Fig. 6 as they are below the third container 606).

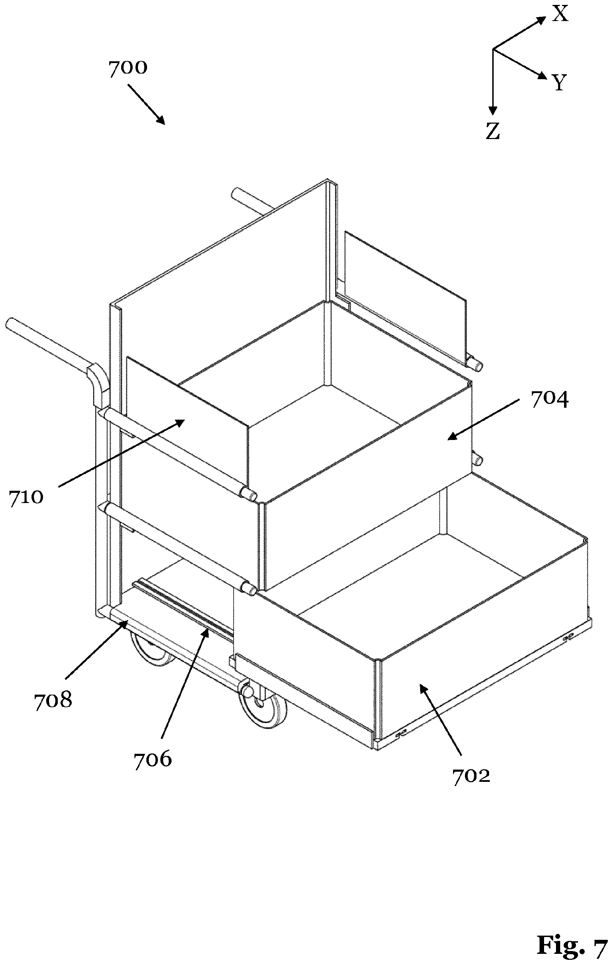

Referring to the embodiment shown in Fig. 7, a unit 700 is depicted. The unit 700 may correspond to and comprise corresponding features to unit 500 and/or to unit 600.

Fig. 7 depicts the unit 700 with a first container 702 and a second container 704 supported thereon. In Fig. 7, the first container 702 is slid out/translated, in a direction parallel to the Y-axis, relative to the corresponding first container 602 in Fig. 7. In Fig. 7, this is achieved using a sliding mechanism 706, which may be coupled to the base 708 of the unit 700. The sliding mechanism 706 may be configured to couple to a cooperating sliding mechanism on an underside of the first container 702 (or on an underside of a shelf as described herein), which together enable sliding movement of the first container 702 relative to the base 708 of the unit. The sliding mechanism may comprise a drawer slide or drawer runner.

As such, support of the lowermost container 702 may differ from support of the other containers 704 since it is not necessary to change the orientation of the support for the lowermost container 702 because no other containers will be positioned below it. However, in other examples, the arrangement of a hollow tube and horizontal support as described herein may also be used for support and sliding out of the lowermost container 702.

In Fig. 7, the uppermost shelves are in the vertical orientation instead of in the horizontal orientation as in Fig. 6. As such, there is no container in Fig. 7 corresponding to the third container 606 of Fig. 6.

### Incorporation of barriers into the unit

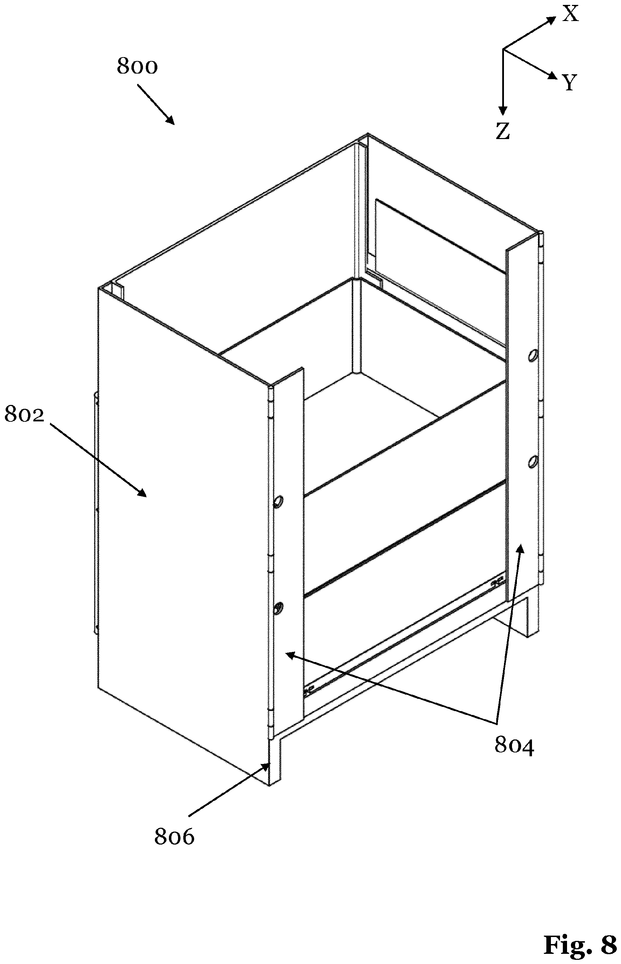

Referring to the embodiment shown in Fig. 8, a unit 800 is depicted. The unit 800 may correspond to and comprise corresponding features to any of units 500, 600 and/or 700.

Fig. 8 illustrates further optional features which may be implemented in any of the units depicted herein. In Fig. 8, the unit 800 comprises a housing 802. The housing may surround and/or be coupled to the frame of the unit 800. The housing may be provided to cover one or more sides of the unit 800 (in the Y-Z plane and/or the X-Z plane). For example, as depicted in Fig. 8, the housing 802 may cover the Y-Z lateral sides of the unit 800 and the X-Z back of the unit 800. The housing 802 may not cover the X-Z front of the unit 800, i.e. the direction in which the one or more shelves can be slid out. The housing 802 may provide protection and/or insulation for the containers and the items held therein. The housing 802 may prevent items falling out of or falling into containers supported on the unit 800.

The housing 802 may comprise barriers 804 disposed at left and right lateral sides of the X-Z front of the unit 800. The barriers 804 may be coupled to other parts of the housing 802 (e.g. the lateral Y-Z sides of the housing 802) or to the frame of the unit 800. The barriers 804 may be coupled to one or more of these components via a hinged connection. The barriers 804 may be moveable between a first position and a second position. In the first position, the barriers 804 may be oriented in the X-Z plane and may be configured to cover a portion of the X-Z front of the unit 800 (as depicted in Fig. 8). In a second position, the barriers 804 may be oriented in the Y-Z plane and may not cover any portion of the front of the unit 800. In the first position, the barriers 804 may help protect the containers and items there in and prevent the containers/shelves sliding out. In the second position, the barriers 804 may enable sliding out of the containers/shelves in the Y-direction.

In Fig. 8, the unit 800 comprises a respective support 806 at the bottom of each lateral side of the unit 800 and does not comprise any wheels. As such, the unit 800 may be configured to remain in one location, or to be moved by a lifting and transporting robot or other vehicle such as a forklift truck.

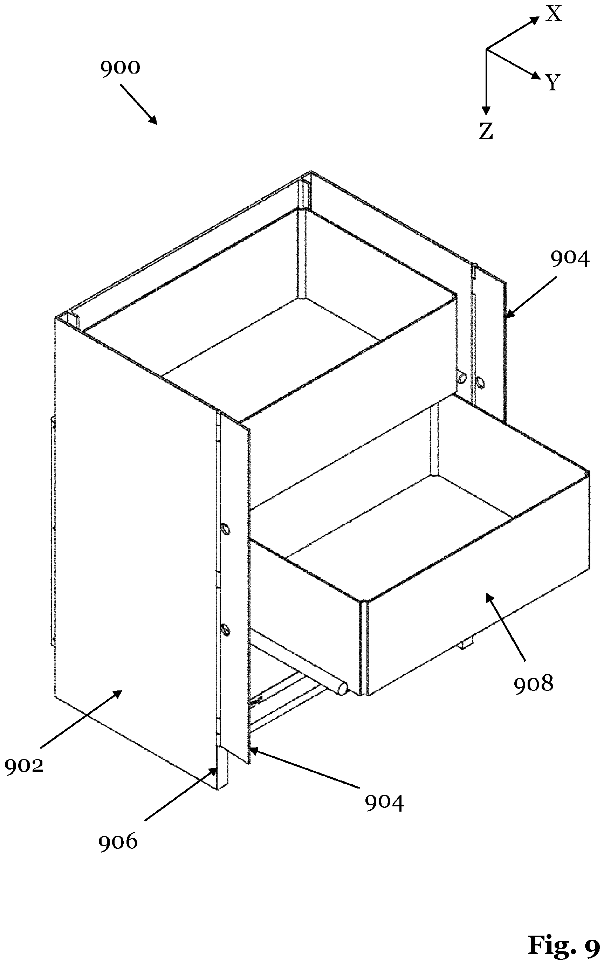

Referring to the embodiment shown in Fig. 9, a unit 900 is depicted. The unit 900 may correspond to and comprise corresponding features to any of units 500, 600, 700 and/or 800.

In particular, the unit 900 depicted in Fig. 9 is similar to the unit 800 depicted in Fig. 8. The unit 900 comprises a housing 902 corresponding to the housing 802, barriers 904 corresponding to the barriers 804 and supports 906 corresponding to the supports 906. Relative to the situation in Fig. 8, in Fig. 9 the barriers 904 are in the second position aligned with the Y-Z plane. This enables sliding out of the container 908 and the shelf supporting the container 908.

### Coupling of the shelves to the frame

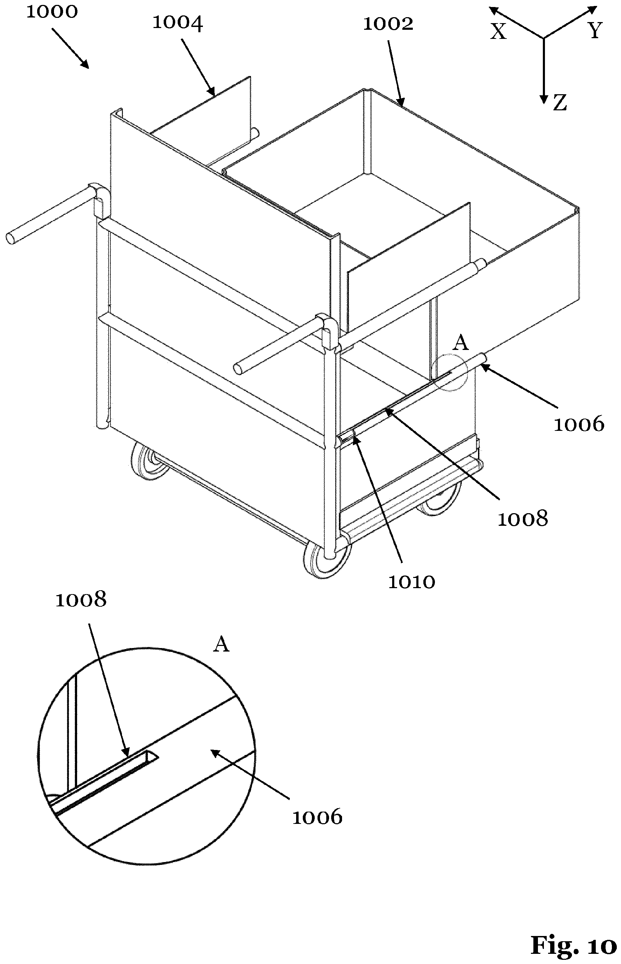

Referring to the embodiment shown in Fig. 10, a unit 1000 is depicted. The unit 1000 may correspond to and comprise corresponding features to any of units 500, 600, 700, 800 and/or 900.

Fig. 10 depicts in more detail features which may be used for coupling the shelves as described herein to the horizontal supports as described herein. These features may be implemented in any of the units described herein.

The unit 1000 comprises a container 1002, one or more shelves 1004 and one or more horizontal supports 1006. In Fig. 10, the top shelves 1004 are in the vertical orientation and the container 1002 is depicted as being slid out (in the Y-direction). In Fig. 10, one or more shelves supporting the container 1002 are not depicted in order to illustrate other features of the unit 1000, though they may generally be present in the unit 1000.

An enlarged view of region A is provided in the lower left corner of Fig. 10. The horizontal support 1006 may comprise a slot 1008, which is an example of a first cooperating feature of the horizontal support 1006 as described herein. The slot 1008 may also be referred to as a groove or a channel as used herein. The slot 1008 may be provided at an upper surface of the horizontal support 1006. The slot may comprise a linear gap or channel or hole or cutaway in the surface of the horizontal support 1006 and may extend along a majority of the length of the horizontal support 1006 (in the Y-direction).

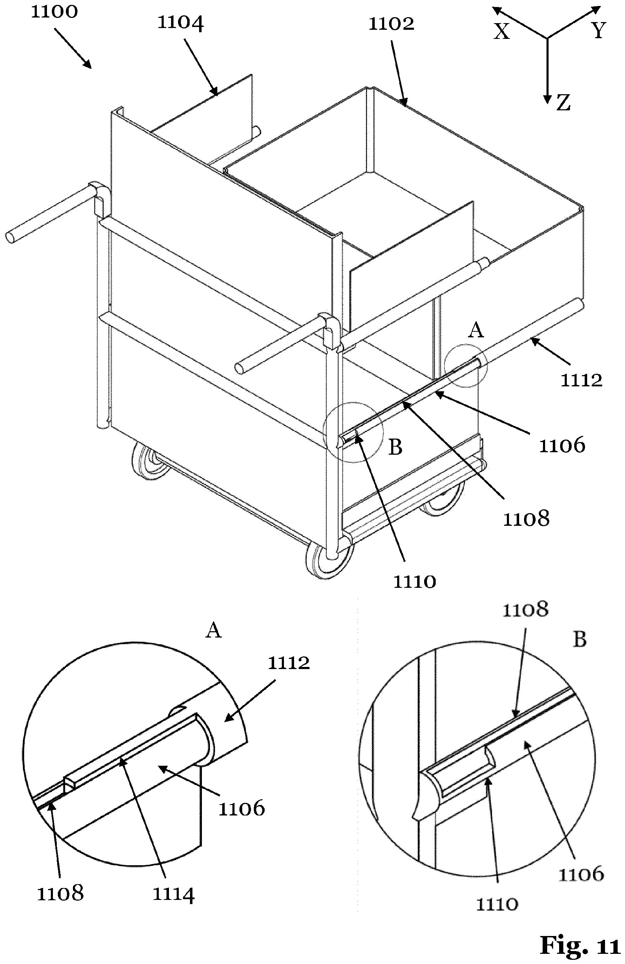

The slot 1010 may comprise a recess 1010 described in more detail in relation to Fig. 11. Each of the horizontal supports 1006 provided in the unit 1000 can have corresponding features to those described above.

Referring to the embodiment shown in Fig. 11, a unit 1100 is depicted. The unit 1100 may correspond to and comprise corresponding features to any of units 500, 600, 700, 800, 900 and/or 1000. Enlarged views of regions A and B are provided at the bottom of Fig. 11.

Fig. 11 depicts in more detail further features which may be used for coupling the shelves as described herein to the horizontal supports as described herein. These features may be implemented in any of the units described herein.

The unit 1100 comprises a container 1102, one or more shelves 1104 and one or more horizontal supports 1106, which may correspond respectively to the container 1002, the one or more shelves 1004 and the one or more horizontal supports 1006 discussed in relation to Fig. 10. In addition, the unit 1100 comprises a slot 1108 and a recess 1110, which may correspond respectively to the slot 1008 and the recess 1010 discussed in relation to Fig. 10.

Unlike in Fig. 10, in Fig. 11 a hollow tube 1112 comprising part of a shelf supporting the container 1102 is depicted. The hollow tube 1112 is disposed around the horizontal support 1106. The hollow tube 1112 is able to rotate relative to the horizontal support 1106 and able to slide along the horizontal support 1106.

The hollow tube 1112 comprises a protrusion 1114. The protrusion 1114 may be located at an upper surface of the hollow tube 1112, but not at other points around the surface of the hollow tube 1112, and may be a linear extension of the hollow tube 1112 in the (negative) Y-direction at that upper surface. In examples in which the hollow tube 1112 (and the horizontal support 1106) is cylindrical, a cross-section of the hollow tube 1112 may comprise a circle of material at a hollow tube radius from a centre of the hollow tube 1112, with a hole or void within this circle of material. The protrusion 1114 may extend in a circumferential direction only around part of this circle, i.e. only around an upper part of this circle. The protrusion 1114 may extend in a radial direction from the outer extent of the circle of material to a location at a smaller radius than an inner extent of the circle of material. In other words, the protrusion 1114 protrudes into the void in the centre of the hollow tube 1112.

The protrusion 1114 is dimensioned to fit within the slot 1108. The width of the slot 1108 (in the X-direction) may be the same as, or slightly larger than, the width of the protrusion (in the X-direction). The protrusion 1114 and the slot 1108 may be arranged to correspond to and cooperate with each other. The protrusion 1114 may fit within the slot 1108 and slide within the slot 1108 in the Y-direction. The linear shape of the protrusion 1114 in the Y-direction, i.e. the larger size of the protrusion in the Y-direction than in the X-direction, may increase the stability of the sliding motion. Since the protrusion 1114 extends within the hollow tube 1112, it extends within the horizontal support 1106 which fits within the hollow tube 1112.

As best seen in Fig. 10, the slot 1008 (corresponding to slot 1108) may not extend to the end of the horizontal support 1006, 1106 (in the positive Y-direction). Due to this, when the container 1002, 1102 and the shelf it is supported on is slid out to a maximum desirable extent in the positive Y-direction, the protrusion 1114 abuts this end of the slot 1008, 1108 such that the container 1002, 1102 and the shelf cannot be slid out any further. This prevents the container 1002, 1102 and the shelf from being decoupled from and falling out of the unit 1000, 1100.

In some examples, the horizontal support 1106 may itself be hollow and cylindrical, with a cross-section of the horizontal support 1106 comprising a circle of material at a horizontal support radius from a centre of the horizontal support 1106. Considering the protrusion 1114 in the Z-direction, at locations along the Z-axis corresponding to the circle of material of the horizontal support 1106, i.e. corresponding to the horizontal support radius, the protrusion may have a first width in the X-direction corresponding to a width of the slot 1108 in the X-direction. However, at locations along the Z-axis smaller and/or greater than the circle of material of the horizontal support 1106, i.e. greater and/or smaller than the horizontal support radius, the protrusion may have a second width in the X-direction greater than the first width. In other words, the protrusion 1114 may be shaped such that it fits within the slot 1108, but bulges out in the X-direction inside and/or outside the horizontal support 1106. This may provide more secure coupling and more stable movement of the hollow tube 1112 relative to the horizontal support 1106.

The slot 1108 may comprise a recess 1110. The recess 1110 may be provided at or close to an end of the horizontal support 1106 in the negative Y-direction, i.e. close to a back of the unit 1100 opposite to the side of the unit 1100 at which containers 1102 are slid out. As described above, the slot 1108 may comprise a cutaway or hole in the horizontal support 1106. The recess 1114 may comprise an extension of this cutaway or hole in a circumferential direction. As depicted in Fig. 11, this circumferential direction may be from the upper surface of the horizontal support 1106, at which circumferential location the slot 1108 is provided, toward the outside of the unit 1100, i.e. towards the negative X-direction for the recess 1114 depicted (though a recess on the opposite lateral side of the unit 1100 would extend towards the positive X-direction). The recess 1114 may extend around approximately 90° of the circumference of the horizontal support 1106, whereas the slot 1108 may extend around less than 90° of the circumference of the horizontal support 1106, e.g. around 10° or 20°. Alternatively described, the sum of the circumferential extents of the recess 1110 and the slot 1108 may be approximately 90°.

The length of the recess 1110 in the Y-direction may be the same as, or slightly larger than, the length of the protrusion 1114 in the Y-direction. The recess 1110 maybe dimensioned to receive the protrusion 1114. In particular, when a shelf is slid all the way in in the negative Y-direction, and rotated from a horizontal orientation to a vertical orientation, the protrusion 1114 may be received within the recess 1110. Since the rotation from horizontal to vertical is a rotation of 90°, the extension of the slot 1108 to 90° provided by the recess 1110 enables the protrusion 1114 to be accommodated in the recess 1110.

Since the recess 1110 is provided only at the innermost part of the slot 1108 (in the negative Y-direction), the corresponding shelf can only be slid out (in the positive Y-direction) when the shelf is in the horizontal orientation and not when it is in the vertical orientation. This provides increased stability of the unit 1100 and the parts thereof. In particular, while the shelves of the unit 1100 are flexible in that they are rotatable and slidable as described herein, the interaction of the protrusion 1114 and the recess 1110 can limit undesirable motion of the shelves, for example sliding out of the shelves when in the vertical orientation as containers are being lowered from above.

Each of the horizontal supports 1106 and each of the shelves 1104/hollow tubes 1112 provided in the unit 1100 can have corresponding features to those described above.

### Interaction of the unit with the storage grid

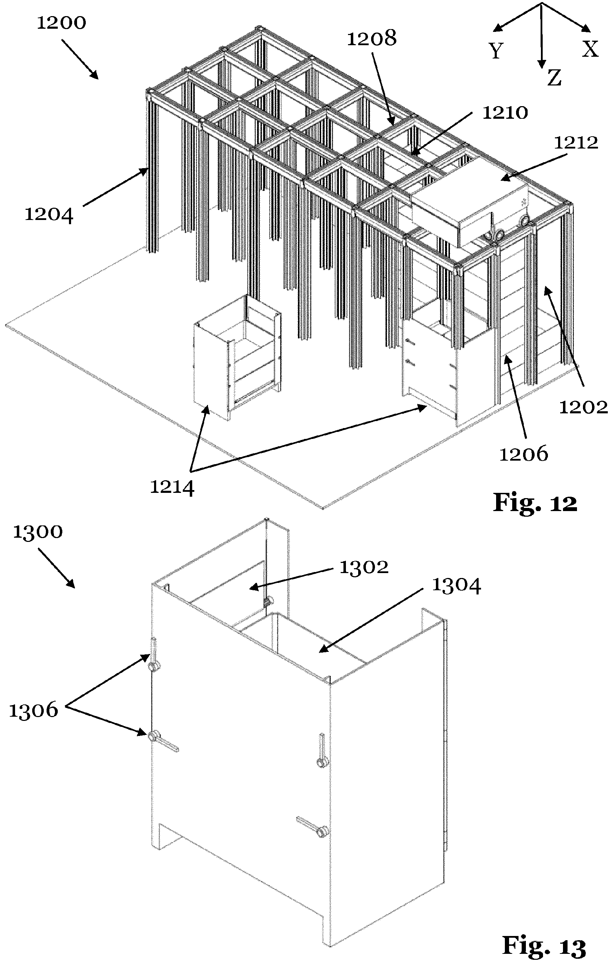

Referring to the embodiment shown in Fig. 12, integration of an automated storage and retrieval system or grid 1200 and a unit as described herein is depicted. The automated storage and retrieval system may correspond to and comprise corresponding features to the automated storage and retrieval system 100 described in relation to Fig. 1.

Similarly to Fig. 1, the automated storage and retrieval system 1200 of Fig. 12 comprises adjacent vertical columns 1202 formed between vertical frame members 1204 and extending in the X and Y directions. A rail system or network is formed on top of the automated storage and retrieval system 1200 and comprises pairs of vehicle rails or tracks 1208, 1210, respectively extending in the X and Y directions. Robots, 1212, which can be of a range of size, shape and function, are provided and configured to run on the rails 1208, 1210 and to transport containers 1206 in both the X and Y directions. The robots 1212 are additionally configured to lift and lower the containers 1206 from/into the columns 1202 in the Z direction.

The automated storage and retrieval system 1200 comprises one or more units 1214 integrated into the automated storage and retrieval system 1200. The one or more units 1214 may correspond to and comprise corresponding features to any of units 500, 600, 700, 800, 900, 1000 and/or 1100. The units 1214 can be temporarily positioned adjacent to or within the storage grid, for example in a port column 126, 128 as described in relation to Fig. 1. A robot 1212 can lower containers 1206 to be supported on the unit 1214, for example on one or more shelves thereof when the one or more shelves are in the horizontal orientation. One or more shelves of the unit 1214 can be oriented in the vertical orientation to enable lowering of a container 1206 below a vertical height of the one or more shelves. The unit 1214 may be moveable as described herein to provide containers to/from different storage locations or grids and/or delivery/pick-up/processing locations.

As described herein, the hollow tubes of the shelves may by cylindrical in shape. In such examples, when a container 1206 is being lowered to be supported on the unit 1214, the cylindrical shape (for example on each lateral side of the unit 1214), may act to guide the container 1206 between the hollow tubes such that it is directed between to be supported on the unit 1214. This prevents and corrects for slight misalignments of the container 1206 as it is being lowered onto the unit 1214.

Referring to the embodiment shown in Fig. 13, a unit 1300 is depicted. The unit 1300 may correspond to and comprise corresponding features to any of units 500, 600, 700, 800, 900, 1000, 1100 and/or 1214.

Fig. 13 depicts in more detail further features which may be used for rotating the shelves as described herein. These features may be implemented in any of the units described herein.

The unit 1300 comprises one or more shelves 1302 and one or more containers 1304. The unit 1300 comprises one or more rotation mechanisms 1306. For example, the unit 1300 may comprise a respective rotation mechanism 1306 for each shelf 1302 of the unit 1300. The rotation mechanisms 1306 may be levers. Each of the rotation mechanisms 1306 may be fixedly connected to a respective shelf 1302 such that rotation of the rotation mechanism 1306 rotates the shelf 1302, i.e. between the horizontal and vertical orientations. As depicted in Fig. 13 by way of non-limiting example, an upper two rotation mechanisms 1306 are in the vertical orientation such that the corresponding shelves 1302 are in the vertical orientation. However, a lower two rotation mechanisms 1306 are in the horizontal orientation such that the corresponding shelves 1302 are in the horizontal orientation with the container 1304 supported thereon.

In some examples, multiple of the rotation mechanisms 1306 (e.g. one or more pairs of the rotation mechanisms at a same vertical height) may be coupled together such that they may be rotated through one motion. In some examples, a port of the automated storage and retrieval system 1200 dimensioned to accommodate the unit 1300 (see Fig. 12) may comprise a mechanism for interacting with and rotating the rotation mechanisms 1306. In some examples, the unit 1300 may comprise a mechanism for interacting with and rotating the rotation mechanisms 1306. Either or both of these mechanisms maybe performed using a processor configured to execute control logic stored in a memory. The processor and memory may be comprised in the port or the unit 1300.

### Operations performed using the unit

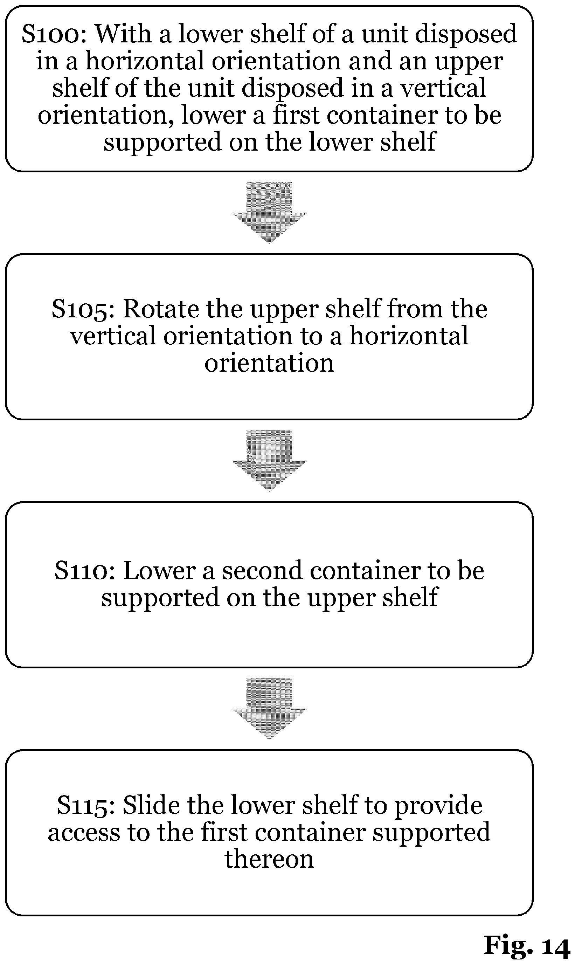

Referring to the embodiment shown in Fig. 14, a method is depicted. The method may be performed using any of the units, systems or devices described herein. Any of the techniques and processes described herein may be considered method steps of the disclosure. Any of the method steps of the disclosure may be considered techniques or processes which one or more of the units, systems and devices (or features thereof) are configured to perform.

In a step S100, the method may comprise, with a lower shelf of a unit disposed in a horizontal orientation and an upper shelf of the unit disposed in a vertical orientation, lowering a first container to be supported on the lower shelf. The upper shelf may be disposed at a greater vertical height on the unit than the lower shelf. The unit may comprise a pair of lower shelves oriented in a corresponding manner and a pair of upper shelves oriented in a corresponding manner. The container may be able to be lowered below the upper shelf when it is 'folded up' into the vertical orientation.

In a step S105, the method may comprise rotating the upper shelf from the vertical orientation to a horizontal orientation.

In a step S110, the method may comprise lowering a second container onto the upper shelf. The upper shelf, in the horizontal orientation, may support the second container thereon.

In a step S115, the method may comprise sliding the lower shelf to provide access to the first container supported thereon. The lower shelf may be slid out to be disposed at least partially outside a footprint of the unit such that one or more items can be added to or retrieved from an interior of first container. The first container can be individually accessed without needing to move the second container located above it on the unit. The units described herein thereby enable the combination of individual accessibility of containers, the ability to dynamically adjust orders, and the efficient storage, loading and transporting of containers.

The disclosure comprises a method for using a unit comprising a frame, a rotatable and slidable lower shelf and a rotatable and slidable upper shelf, the method comprising: with the lower shelf disposed in a horizontal orientation and the upper shelf disposed in a vertical orientation, lowering a first container to be supported on the lower shelf; rotating the upper shelf from the vertical orientation to a horizontal orientation; lowering a second container to be supported on the upper shelf; and sliding the lower shelf to provide access to the first container supported thereon. The disclosure comprises the incorporation into this method of the features of the unit described herein and the techniques and processes described as performed by or using these features or this unit.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A unit for supporting a plurality of containers, the unit comprising:
a frame; and
one or more shelves coupled to the frame, each of the shelves being rotatable about a respective horizontal axis and slidable parallel to the respective horizontal axis.

2. A unit according to claim 1, wherein each of the shelves is rotatable between a horizontal orientation and a vertical orientation.

3. A unit according to claim 1 or claim 2, wherein the frame comprises at least one horizontal support, each of the horizontal supports being aligned with a respective one of the horizontal axes and each being coupled to a respective one of the shelves.

4. A unit according to claim 3, wherein each of the horizontal supports comprises a respective first cooperating feature and each of the shelves comprises a respective second cooperating feature, each of the first cooperating features being configured to couple to a respective one of the second cooperating features.

5. A unit according to claim 4, wherein the at least one first cooperating feature and the at least one second cooperating feature are configured to enable slidable movement of each of the shelves parallel to the respective horizontal axis when the respective shelf is in the horizontal orientation but not when the respective shelf is in the vertical orientation.

6. A unit according to claim 4 or claim 5, wherein each of the first cooperating features comprises a respective slot and each of the second cooperating features comprises a respective protrusion, each of the protrusions being slidable within a respective one of the slots.

7. A unit according to claim 6, wherein each of the slots comprises a respective recess configured to receive a respective one of the protrusions when the respective shelf moves from the horizontal orientation to the vertical orientation.

8. A unit according to any of claims 3-7, wherein each of the shelves comprises: a respective hollow tube rotatably coupled to a respective one of the horizontal supports; and a respective planar portion configured to support a container of the plurality of containers thereon, the respective planar portion being fixedly connected to the respective hollow tube.

9. A unit according to claim 8, wherein each of the hollow tubes is disposed around and slidable with respect to the respective horizontal support.

10. A unit according to any preceding claim, wherein the frame comprises: a base;
and one or more wheels coupled to the base and configured to enable movement of the unit.

11. A unit according to any preceding claim, wherein the frame comprises an open top configured to enable vertical insertion of the plurality of containers into the unit.

12. A unit according to claim 11, wherein each of the shelves is configured to enable a container of the plurality of containers to be inserted vertically below the respective shelf when in the vertical orientation and configured to support a container of the plurality of containers when in the horizontal orientation.

13. A unit according to any preceding claim, comprising a pair of shelves coupled to the frame at a same vertical height.

14. A unit according to claim 13, wherein the pair of shelves have a horizontal space therebetween in a direction perpendicular to the horizontal axes when in the horizontal orientation.

15. A unit according to any preceding claim, comprising a plurality of shelves coupled to the frame, at least some shelves of the plurality of shelves being coupled to the frame at different vertical heights.
